# EUROPÄISCHE PATENTANMELDUNG

(11) **EP 2 518 337 A1**
(43) Veröffentlichungstag der Anmeldung: **31.10.2012**
(21) Anmeldenummer: 12158343.9
(22) Anmeldetag: 07.03.2012
(51) Int. Cl.: F16B 13/14

(54) **Ankerstange**

(30) Priorität: 28.04.2011 DE 102011017665
(71) Anmelder: HILTI Aktiengesellschaft, 9494 Schaan (LI)
(72) Erfinder: Glogger, Josef, 86807 Buchloe (DE)

(57) **Zusammenfassung**

Eine Ankerstange zur chemischen Befestigung in einem Bohrloch (18) hat einen ein Befestigungsgewinde (16) aufweisenden Einbindeabschnitt (12), der zur Einbettung im Bohrloch (18) vorgesehen ist. Der Einbindeabschnitt (12) weist wenigstens eine Verdrehsicherung (20) auf, mit einem Klemmelement (24), das so ausgebildet ist, dass es, wenn der Einbindeabschnitt (12) im Bohrloch (18) eingebettet ist, bei einer in Umfangsrichtung auf das Befestigungsgewinde (16) wirkenden Kraft eine Klemmwirkung in Längsrichtung (A) des Einbindeabschnitts (12) entfaltet.

## Beschreibung

Die Erfindung betrifft eine Ankerstange zur chemischen Befestigung in einem Bohrloch.

Bekannte Ankerstangen weisen an einem Einbindeabschnitt, der mit einer aushärtbaren Masse in das vorgefertigte Bohrloch eingebettet wird, ein Befestigungsgewinde auf, das auf das aus dem Bohrloch herausragende Anbauteilende der Ankerstange einwirkende Kräfte in den Untergrund einleitet. Um zu verhindern, dass bei einer Krafteinwirkung am Anbauteilende in Umfangsrichtung die Ankerstange aus dem Untergrund herausgedreht werden kann, wird am Einbindeabschnitt eine Verdrehsicherung angeordnet. Eine bekannte Verdrehsicherung besteht beispielsweise aus einem Abschnitt des Einbindeabschnitts, der mit einem Längsrändel versehen ist. Eine andere bekannte Verdrehsicherung sieht in einem Bereich des Einbindeabschnitts einen trilobularen Querschnitt vor. Nachteilig ist dabei, dass der Bereich, in dem die Verdrehsicherung ausgebildet ist, nicht zur Lastaufnahme beitragen kann.

Aufgabe der Erfindung ist es, eine Ankerstange mit einer verbesserten Verdrehsicherung zu schaffen.

Dies wird erreicht, indem eine Ankerstange zur chemischen Befestigung in einem Bohrloch, einen ein Befestigungsgewinde aufweisenden Einbindeabschnitt hat, der zur Einbettung im Bohrloch vorgesehen ist, wobei der Einbindeabschnitt wenigstens eine Verdrehsicherung mit einem Klemmelement aufweist, das so ausgebildet ist, dass es, wenn der Einbindeabschnitt im Bohrloch eingebettet ist, bei einer in Umfangsrichtung auf das Befestigungsgewinde wirkenden Kraft eine Klemmwirkung zumindest in Längsrichtung des Einbindeabschnitts entfaltet.

Die Erfindung beruht auf der Erkenntnis, dass beim Zusammenwirken eines Gewindes mit einem Klemmelement ausgenutzt werden kann, dass, vereinfacht gesagt, das Klemmelement einer Drehbewegung des Befestigungsgewindes in dem den Einbindeabschnitt umgebenden ausgehärteten Befestigungsmaterial entgegenwirkt, indem im umgebenden Material eine Klemmkraft in Längsrichtung hervorgerufen wird. Diese axiale Verklemmung, die sich aufgrund der Gewindesteigung bei einer Belastung in Umfangsrichtung der Ankerstange ergibt, verhindert auch eine Bewegung des Befestigungsgewindes in Umfangsrichtung. Nach diesem Prinzip ist also keine Verdrehsicherung mit großer axialer Länge zum Verkeilen im umgebenden Material notwendig, sondern ein in Längsrichtung kurzes Klemmelement ist ausreichend, um eine sichere Fixierung der Ankerstange zu bewirken.

Natürlich ergibt sich aufgrund der Einbettung des Einbindeabschnitts in die ihn umgebende ausgehärteten Masse bei einer Belastung in Umfangsrichtung auch eine Klemmwirkung in Umfangsrichtung aufgrund der hohen und durch die in Längsrichtung wirkende Klemmkraft noch erhöhte Reibung zwischen dem Klemmelement und dem umgebenden Material.

Das Klemmelement kann auf vielfältige Weise ausgebildet sein.

In einer Ausführungsform der Gewindestange hat das Klemmelement einen Querschnitt, der in etwa dem eines in Längsrichtung von einem Einschubende aus gesehen an das Klemmelement anschließenden Bereichs des Einbindeabschnitts entspricht. Damit wird erreicht, dass die Kraft beim Eindrehen der Gewindestange in das Bohrloch nicht unnötig erhöht wird und die aushärtbare Masse ungehindert um das Klemmelement herum den Spalt zwischen Bohrlochwand und dem Einbindeabschnitt füllen kann. In einer alternativen Ausführungsform hat das Klemmelement wenigstens abschnittsweise einen größeren Querschnitt als ein sich in Längsrichtung von einem Einschubende aus gesehen an das Klemmelement anschließender Bereich des Einbindeabschnitts. Auf diese Weise ist sichergestellt, dass das Klemmelement nicht in Längsrichtung in das Gewinde hineingezogen werden kann. Bei einer auf die Ankerstange in Umfangsrichtung wirkenden Kraft verklemmt sich das Klemmelement in Längsrichtung in der umgebenden ausgehärteten Masse, mit der das Bohrloch nach Einsetzen des Einbindeabschnitts verfüllt wurde, und verhindert so eine Drehung des Befestigungsgewindes in Auszugsrichtung.

In einer bevorzugten Ausführungsform ist das Klemmelement als in Längsrichtung des Befestigungsabschnitts angeordneter, konusförmiger Abschnitt ausgebildet. Die axiale Länge des konusförmigen Abschnitts kann dabei ungefähr einer Steigung des Befestigungsgewindes entsprechen oder kleiner sein. Es hat sich herausgestellt, dass eine größere axiale Länge nicht notwendig ist. Eine vorteilhafte Form für den konusförmigen Abschnitt ist die Form eines Kegelstumpfes, wobei die Grundfläche im Wesentlichen senkrecht zur Längsrichtung ausgerichtet ist.

Die Konusfläche ist vorteilhaft vom Einschubende weg gerichtet.

Der Konuswinkel kann in etwa gleich einem Gleitwinkel des Befestigungsgewindes sein. Damit kann das Klemmelement selbst zur Lastaufnahme beitragen. Außerdem wird dadurch das minimale Gleiten, das für die Umsetzung von Axial- in Radialkräfte notwendig ist, nicht behindert.

In einer bevorzugten Ausführungsform der Erfindung bildet das Klemmelement das Einschubende der Ankerstange, ist also im eingesetzten Zustand am bohrlochtiefsten Punkt der Ankerstange angeordnet. Gerade bei einem als konusförmiger Abschnitt ausgebildeten Klemmelement können die an dieser Stelle wirkenden hohen Kräfte bei Belastung problemlos in das umgebende Material eingeleitet werden.

In einer anderen bevorzugten Ausführungsform ist das Klemmelement an einem anbauteilseitigen Ende des Befestigungsabschnitts, also im eingebetteten Zustand am oberen Ende des Bohrlochs angeordnet. Auch hier ergeben sich die gleichen Vorteile und Wirkungsweise wie oben beschrieben.

Das Klemmelement könnte auch an anderer Stelle des Einbindeabschnitts vorgesehen sein. Es ist auch möglich, mehrere Klemmelemente über die Länge des Einbindeabschnitts verteilt vorzusehen. Die Form des Klemmelements kann, wie bei einem konusförmigen Abschnitt, im Querschnitt kreisförmig sein, es sind aber auch Klemmelemente mit unrundem Querschnitt denkbar. Das Klemmelement könnte auch in einem Abschnitt des Befestigungsgewindes mit einem Versatz oder mit einer anderen Gewindesteigung bestehen.

Der minimale Außendurchmesser des Klemmelements kann in etwa so groß sein wie der Kerndurchmesser des Befestigungsgewindes. Der maximale Außendurchmesser des Klemmelements kann aber auch größer als der maximale Außendurchmesser des Befestigungsgewindes sein. Vorzugsweise entspricht der Außendurchmesser des Klemmelements dem Außendurchmesser des Befestigungsgewindes. Durch derartige Gestaltungen lässt sich eine einfach zu fertigende und in sich sehr stabile Ankerstange erzeugen.

Die Erfindung wird nachfolgend anhand mehrerer Ausführungsbeispiele mit Bezug auf die beigefügten Zeichnungen näher beschrieben. In den Zeichnungen zeigen:
- Figur 1:: eine schematische Schnittansicht einer erfindungsgemäßen Ankerstange gemäß einer ersten Ausführungsform, eingebettet in ein Bohrloch;
- Figur 2:: eine schematische perspektivische Ansicht der Ankerstange aus Figur 1; und
- Figur 3:: eine schematische perspektivische Ansicht einer erfindungsgemäßen Ankerstange gemäß einer zweiten Ausführungsform.

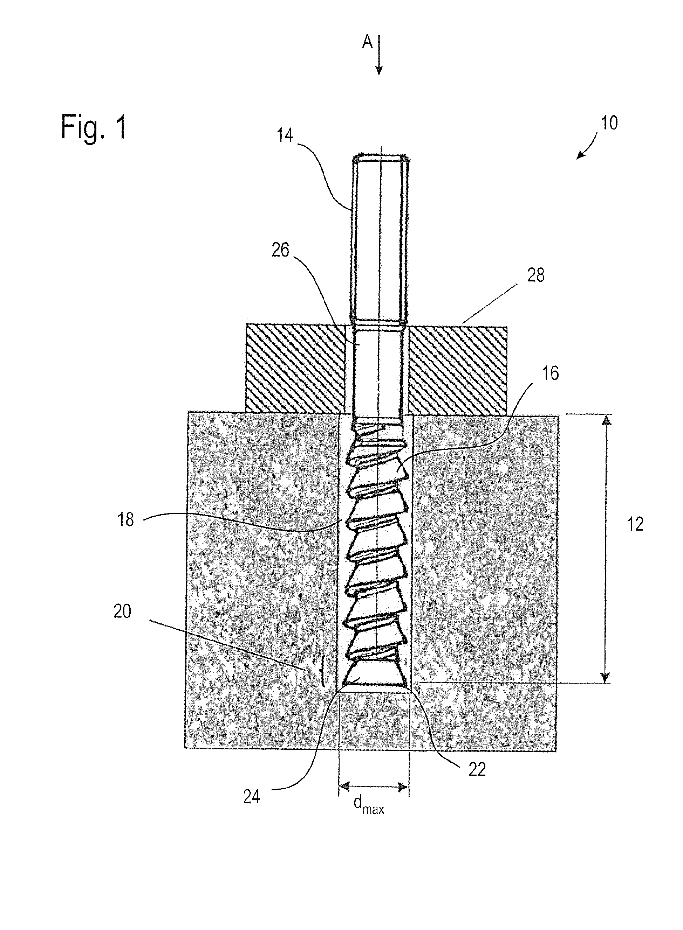

Figur 1 zeigt eine Ankerstange 10, die einen Einbindeabschnitt 12 sowie einen Anbauabschnitt 14 aufweist. Der Einbindeabschnitt 12 hat ein Befestigungsgewinde 16 und ist dazu vorgesehen, wie in Figur 1 dargestellt, in ein vorgefertigtes Bohrloch 18 eingesetzt zu werden.

Das Bohrloch 18 wird nach dem Einsetzen der Ankerstange 10 mit einer geeigneten aushärtbaren Masse verfüllt, beispielsweise einem Mörtel oder einem Klebstoff, wobei eine form- und stoffschlüssige Verbindung des Einbindeabschnitts 12 mit der aushärtbaren Masse entsteht. Das Bohrloch 18 hat dabei einen Durchmesser, der um so viel größer ist als der maximale Durchmesser des Einbindeabschnitts 12 gewählt ist, dass dieser an allen Seiten von der aushärtbaren Masse umgeben ist.

Am Einbindeabschnitt 12 ist eine Verdrehsicherung 20 ausgebildet, und zwar in diesem Beispiel an einem Einschubende 22, der das Ende des Einbindeabschnitts 12 bildet, welches im eingebetteten Zustand den bohrlochtiefsten Teil der Ankerstange 10 bildet. Die Verdrehsicherung 20 weist ein Klemmelement 24 auf, das hier in Form eines konusförmigen Abschnitts, der in Längsrichtung A des Einbindeabschnitts 12 angeordnet ist, ausgebildet ist. Der konusförmige Abschnitt hat die Form eines Kegelstumpfs, wobei die Grundfläche des Kegelstumpfs im Wesentlichen senkrecht zur Längsrichtung A ausgerichtet ist. Die Konusfläche weist dabei vom Einschubende 22 weg. Im gezeigten Beispiel schließt sich das Klemmelement 24 direkt an die unterste Windung des Befestigungsgewindes 16 an.

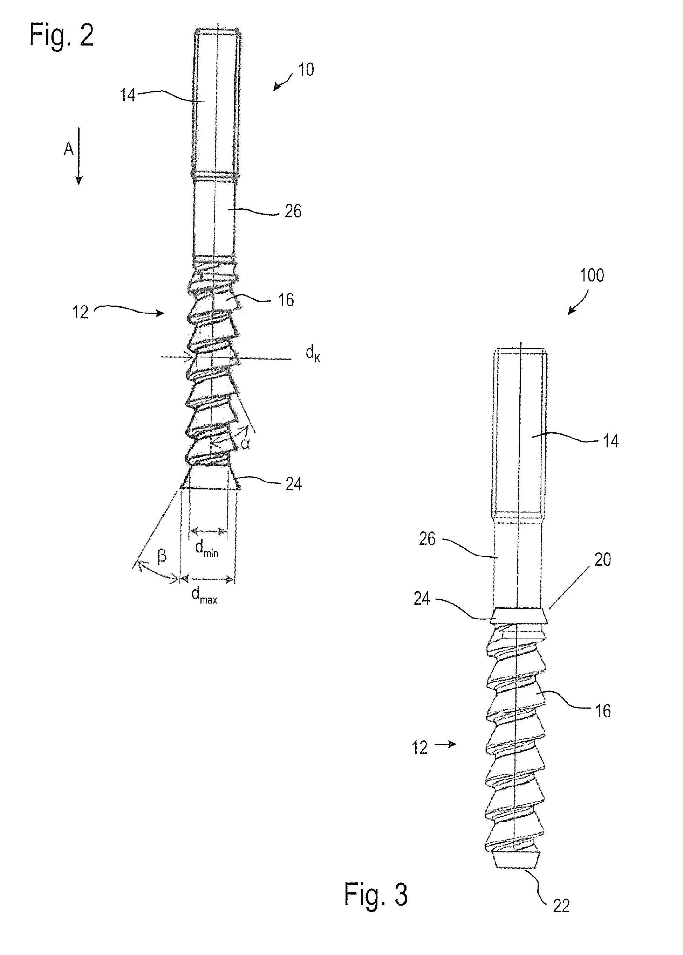

Die Geometrie des Befestigungsgewindes 16 und des Klemmelements 24 sind deutlicher in Figur 2 dargestellt. Der maximale Außendurchmesser dₘₐₓ des konusförmigen Abschnitts ist etwa 0,2 mm kleiner als der Bohrlochdurchmesser gewählt. Der minimale Innendurchmesser des konusförmigen Abschnitts dₘᵢₙ entspricht in etwa dem Kerndurchmesser d_{K} des Befestigungsgewindes 16. Der Konuswinkel β der Konusfläche mit der Längsrichtung A hat etwa die gleiche Größe wie der Konuswinkel α des Befestigungsgewindes 16 (ebenfalls gemessen zur Längsrichtung A). Winkelabweichungen von +/- 15° behindern die Funktion nicht, wie sich herausgestellt hat.

Die Verdrehsicherung 20 wirkt wie folgt. Wirkt am Anbauabschnitt 14 eine Kraft in Umfangsrichtung, beispielsweise über ein dort ausgebildetes (hier nicht dargestelltes) Gewinde, in Auszugsrichtung des Befestigungsgewindes 16, so wird das Klemmelement 24 in Längsrichtung A vom Einschubende 22 weg in Richtung der Öffnung des Bohrlochs 18 nach oben belastet. Hierdurch entsteht eine Verklemmung in Längsrichtung A. Das Klemmelement 24 kann nicht in den Gewindekanal des Befestigungsgewindes 16 eintreten, da im vorliegenden Fall zum einen der Winkel β des Konus nicht dem Winkel α des Befestigungsgewindes 16 entspricht und zum anderen das Klemmelement 24 breiter ist als der Durchmesser des Befestigungsgewindes 16. Aufgrund der Verklemmung in Längsrichtung A wird aber auch eine Drehung der Ankerstange 10 an sich verhindert.

Figur 3 zeigt eine zweite Ausführungsform einer Ankerstange 100. Im Unterschied zur gerade beschriebenen Ausführungsform ist die Verdrehsicherung 20 mit einem konusförmigen Klemmelement 24 am bezüglich des Einschubendes 22 oberen Ende des Einbindeabschnitts 12 angeordnet, jedoch auf jeden Fall in einem Bereich, der in das Bohrloch 18 mit eingebettet wird. Die Wirkungsweise ist wie gerade beschrieben.

Bei den gezeigten Beispielen ist der Anbauabschnitt 14 so ausgebildet, dass zwischen dem freien Ende des Anbauabschnitts 14 und dem Beginn des Einbindeabschnitts 12 ein Bereich 26 mit leicht reduziertem Durchmesser vorgesehen ist, der dazu genutzt werden kann, ein weiteres Anbauteil 28 zu fixieren (siehe Figur 1) oder eine Beschriftung auf die Ankerstange aufzubringen. Der Bereich 26 kann aber auch den gleichen Durchmesser wie der Anbauabschnitt 14 haben oder, falls der Anbauabschnitt 14 mit einem Gewinde versehen ist, ebenfalls ein Gewinde aufweisen.

Gegenüber herkömmlichen Ankerstangen mit beispielsweise einem als Verdrehsicherung ausgebildeten Rändel ist in diesen Beispielen die Steigung des Befestigungsgewindes 16 verringert, während der Konuswinkel α größer ist. Der maximale Gewindedurchmesser sowie der Kerndurchmesser d_{K} sind in etwa gleich. Der Steigungswinkel ist ebenfalls kleiner, und die Gesamtgewindelänge kann vergrößert werden, da das Klemmelement 24 einen geringeren axialen Platzbedarf hat als ein Rändel. Die kleinere Steigung hat den Effekt, dass sich die Auszugslast, die an die Ankerstange angelegt werden kann, erhöht.

## Patentansprüche

1. Ankerstange zur chemischen Befestigung in einem Bohrloch (18), mit einem ein Befestigungsgewinde (16) aufweisenden Einbindeabschnitt (12), der zur Einbettung im Bohrloch (18) vorgesehen ist,
wobei der Einbindeabschnitt (12) wenigstens eine Verdrehsicherung (20) aufweist,
mit einem Klemmelement (24), das so ausgebildet ist, dass es, wenn der Einbindeabschnitt (12) im Bohrloch (18) eingebettet ist, bei einer in Umfangsrichtung auf das Befestigungsgewinde (16) wirkenden Kraft eine Klemmwirkung zumindest in Längsrichtung (A) des Einbindeabschnitts (12) entfaltet.

2. Ankerstange nach Anspruch 1, **dadurch gekennzeichnet, dass** das Klemmelement (24) einen Querschnitt hat, der dem eines in Längsrichtung (A) von einem Einschubende (22) aus gesehen an das Klemmelement (24) anschließenden Bereichs des Einbindeabschnitts (12) entspricht.

3. Ankerstange nach Anspruch 1, **dadurch gekennzeichnet, dass** das Klemmelement (24) wenigstens abschnittsweise einen größeren Querschnitt hat als ein in Längsrichtung (A) von einem Einschubende (22) aus gesehen an das Klemmelement (24) anschließender Bereich des Einbindeabschnitts (12).

4. Ankerstange nach einem der vorhergehenden Ansprüche, **dadurch gekennzeichnet, dass** das Klemmelement (24) als in Längsrichtung (A) des Einbindeabschnitts (12) angeordneter, konusförmiger Abschnitt ausgebildet ist.

5. Ankerstange nach Anspruch 2 oder 3, **dadurch gekennzeichnet, dass** die Konusfläche vom Einschubende (22) weg gerichtet ist.

6. Ankerstange nach einem der Ansprüche 4 und 5, **dadurch gekennzeichnet, dass** der Konuswinkel (β) in etwa gleich einem Gleitwinkel (α) des Befestigungsgewindes (16) ist.

7. Ankerstange nach einem der vorhergehenden Ansprüche, **dadurch gekennzeichnet, dass** das Klemmelement (24) das Einschubende (22) der Ankerstange (10) bildet.

8. Ankerstange nach einem der vorhergehenden Ansprüche, **dadurch gekennzeichnet, dass** das Klemmelement (24) an einem anbauteilseitigen Ende des Einbindeabschnitts (12) angeordnet ist.

9. Ankerstange nach einem der vorhergehenden Ansprüche, **dadurch gekennzeichnet, dass** der maximale Außendurchmesser (dₘₐₓ) des Klemmelements (24) größer als der maximale Außendurchmesser des Befestigungsgewindes (16) ist.

10. Ankerstange nach einem der vorhergehenden Ansprüche, **dadurch gekennzeichnet, dass** der minimale Außendurchmesser (dₘᵢₙ) des Klemmelements (24) in etwa so groß ist wie der Kerndurchmesser (d_{K}) des Befestigungsgewindes (16).
